Europäisches Patentamt

(19) European Patent Office

Office européen des brevets

(11) Publication number: **0 398 887 B1**

(12) EUROPEAN PATENT SPECIFICATION

(45) Date of publication of patent specification: **26.01.94** (51) Int. Cl.⁵: **G06K 9/32**

(21) Application number: **89900114.3**

(22) Date of filing: **22.11.88**

(86) International application number:
**PCT/US88/04152**

(87) International publication number:
**WO 89/05495 (15.06.89 89/13)**

(54) **SKEW DETECTOR FOR DIGITAL IMAGE PROCESSING SYSTEMS.**

(30) Priority: **02.12.87 US 127305**

(43) Date of publication of application:
**28.11.90 Bulletin 90/48**

(45) Publication of the grant of the patent:
**26.01.94 Bulletin 94/04**

(84) Designated Contracting States:
**DE FR GB NL**

(56) References cited:
**EP-A- 0 017 090**
**EP-A- 0 176 910**
**EP-A-03 086 73**
**US-A- 4 633 507**

(73) Proprietor: **EASTMAN KODAK COMPANY (a New Jersey corporation)**
**343 State Street**
**Rochester New York 14650(US)**

(72) Inventor: **BARSKI, Lori, Lynn**
**103 Parkway Drive**
**North Chili, NY 14514(US)**

(74) Representative: **Blickle, K. Werner, Dipl.-Ing. et al**
**KODAK AKTIENGESELLSCHAFT**
**Patentabteilung**
**D-70323 Stuttgart (DE)**

## Description

### BACKGROUND OF THE INVENTION

Optical character recognition systems and image processing systems generally are well-known in the art. One problem with such systems is that the printed material in a document being read in the system may be skewed at an angle with respect to the optical character recognition system orientation. This problem is called skew. It is not cost effective to rotate the document in the system scanner to eliminate the skew. The preferred method is to process the video data generated from viewing the document in such a manner as to remove the skew prior to image processing. One such data processing method is disclosed in U.S. Patent No. 3,967,243, in which the skew is removed by normalizing vertical and horizontal second moments computed from the video data. This sort of computation is fairly sophisticated and potentially burdensome.

A simpler method is to organize the lines (rows) of video data generated by the document reader into successive columns of predetermined positions. In this method, disclosed in U.S. Patent No. 4,558,461, whenever there is a sufficient number (e.g., one) of black pixels in a particular column in a given line of data, that entire column in that line (only) is then transformed to all black pixels. As a result, if the video data is skewed, a smeared staircase pattern appears. The skew angle may be easily computed from the shape of the staircase.

This latter method suffers from the disadvantage that the start position of each step in the staircase is fixed by the predetermined positions of the columns into which the rows of video data are organized and then smeared. This introduces a type of error which heuristically may be thought of as "quantization" error. More specifically, the edge of each step in the staircase pattern coincides with a boundary of one of the columns, the location of which is predetermined without regard to the contents of the video data. The accuracy of this process is limited by the minimum width of the columns into which the rows of video data may be organized. This is analogous to the quantization error typically encountered in analog-to-digital conversion, in which the accuracy is limited by the minimum step size of the digital quantization.

### PROBLEM TO BE SOLVED

The problem is how to determine and subsequently remove skew in video data representing printed information before the data is fed to an image processing system without complex computations (such as the computation of second moments as in U.S. Patent No. 3,967,243) and without introducing the types of errors encountered in the simpler processing techniques, such as the "quantization" error introduced by the simple technique of U.S. Patent No. 4,558,461.

### SUMMARY OF THE INVENTION

Video data representing the image of a printed document is de-skewed before being processed by an optical character recognition system. The skew detection and subsequent de-skewing is performed by a de-skewing system, respectively method according to claims 1, 9 and 13. In accordance with the process of the invention by first organizing each row of the succession of rows of video data into run lengths of white ("off") pixels. A run length is defined by a succession of adjacent pixels, all of which are "off" or white. All of the white run lengths in each row of video data are compared against a threshold white run length. The pixels within only those white run lengths shorter than the threshold white run length are transformed to black pixels.

The next step is to organize the rows of video data anew, this time into run lengths of black pixels. For each row of video data, the longest black run length is selected, and its start location in the row is noted. Significantly, the start location of the selected black run length is determined by the contents of the image represented by the video data, and not by any arbitrary predetermination as in U.S. Patent No. 4,558,461 discussed above. This guards against "quantization" error, as will be discussed below. The offset distances between successive run length start locations are also noted.

If the printed image represented by the video data is skewed about an angle, the pattern of selected black run lengths will correspond to a staircase pattern. The offset distance between each pair of adjacent steps in the staircase pattern provides a measure of the skew angle. (The angle is the tangent of the ratio of the step height to the offset distance.) Depending upon the number of steps in the staircase pattern, there is a statistical ensemble of offset distances (and corresponding individual skew angles) characterized by a standard deviation.

One feature of the invention is to compute the "mean" skew angle from the ensemble of offset distances (or individual skew angles) in the staircase pattern. In accordance with this feature of the invention, the number of successive offset distances or individual skew angles need only be sufficient to minimize the standard deviation of the ensemble below a threshold corresponding to a desired statistical confidence level.

Accordingly, before the average skew angle is computed from the ensemble of offset distances or individual skew angles, the following steps are taken to filter out unreliable data and to ensure that the remaining data corresponds to a true staircase pattern of black run lengths:

Offset distances between successive run lengths which fall outside of a specified range are discarded. Then, only continuous successions of run lengths are considered, in which none of the individual "steps" or run lengths in the pattern have been discarded for being out of range or for other reasons.

Next, the largest continuous succession of run lengths in the frame is inspected for reliability as follows: First, the sum of all of the differences between successive run lengths start positions is determined. This sum should either be a large negative number or a large positive number (depending upon the direction of the skew) whose absolute value exceeds a threshold magnitude. If this sum of differences does not exceed the threshold magnitude, this indicates that there are not enough samples and more video data is required to provide a reliable measure of the skew angle (or else the skew angle is negligible). Otherwise, the ensemble of offset distances (or individual skew angles) is inspected for reliability by computing its standard deviation. If the standard deviation is not below a threshold value corresponding to a selected statistical confidence level, then, again, more video data is required to provide a reliable computation of the skew angle. Otherwise, the data present is deemed sufficient to provide a reliable measure of the skew angle.

The skew angle is computed from the mean of the succession of skew angles (or offset distances) remaining after all of the foregoing filtering steps.

Solution to the Problem

The foregoing processing requires no computation of geometric moments or second moments of the video data (thus minimizing the amount of memory required, a significant advantage). Furthermore, the process of the invention minimizes or virtually eliminates quantization error in setting up a smeared staircase pattern from the video data. This is because the starting location of each step in the smeared staircase pattern is virtually exclusively a function of the content of the video data representing the printed image, and is not affected by an artifact of the data processing such as the type of "quantization" error discussed above. In fact, in the preferred embodiment of the invention, the accuracy of the individual start locations of the steps or individual black run lengths in the staircase pattern is limited only by the resolution or pixel size of the video data. This represents a significant advance in the art and overcomes the trade-off between accuracy or reliability vs. process simplicity.

DESCRIPTION OF THE DRAWINGS

The invention may be understood by reference to the accompanying drawings of which:

Figs. 1a and 1b illustrate the run-length processing of the present invention;

Fig. 2 illustrates the system of the invention;

Figs. 3a and 3b illustrate examplary results of the run length processing of the invention.

DETAILED DESCRIPTION

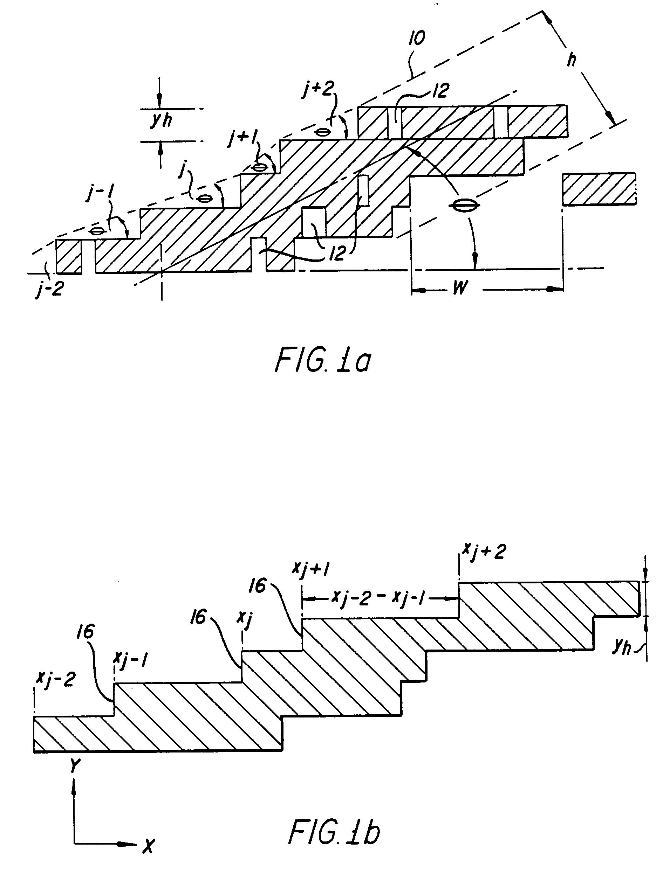

Referring to Fig. 1a, a printed image represented by successive horizontal lines of video data may correspond to a straight line 10 having a thickness h subtended at a skew angle $\theta$ across the printed document or frame of video data. A reader scans the document to generate successive rows of video data. Fig. 1 illustrates the video data for rows j-2, j-1, j, j+1, j+2 (it being understood j begins at zero and ends at n, wherein n is the number of rows in the entire video frame representing the scanned document).

Due to uncertainties in the conversion of the printed image to video data, or due to imperfections in the original printed image itself from which the video data was created, the straight line 10 may not be represented by a perfectly contiguous area of black pixels (corresponding to the shaded regions in Fig. 1a). In fact, various "white" regions 12 may exist, as illustrated in Fig. 1a. These white regions are attributable to noise or other imperfections, but are not truly representative of the straight line 10, particularly if each of the regions 12 is of a width less than some threshold w.

In order to smear the image, the invention organizes each horizontal line of video data illustrated in Fig. 1a into white run lengths. Each run length corresponds to one of the white areas 12 in Fig. 1a. The white pixels comprising each of those white run lengths 12 whose length is less than the threshold width w are all transformed to black pixels, in accordance with the process of the invention. This smearing process therefore "fills in" the white or blank areas 12 within the horizontal line 10 to produce the "smeared" staircase pattern of Fig. 1b. The next step of the invention is to organize each horizontal line of the smeared video data of Fig. 1b into black run lengths. The longest black run length in each horizontal line is then selected. In the case of Fig. 1b, the longest run length in each horizontal line corresponds to one of the individual steps 16 in the staircase pattern of black (shaded) pixels. The start location $x_j$ of the $j^{th}$ step, for example, is noted.

The process of the invention now ensures that the ensemble of run length start locations $x_j$ obey the following reliability criteria:

1. The offset distance $x_j - x_{j-1}$ between each pair of adjacent run lengths falls within an acceptable band.

2. There is a continuous succession of run length start locations, or, equivalently, there is no missing step in the staircase pattern of Fig. 1b.

3. The absolute value of the sum of all of the offset distances between adjacent steps in the staircase pattern of Fig. 1b exceeds a threshold magnitude.

4. The standard deviation of the ensemble of offset distances is less than a threshold value corresponding to a desired (previously selected) statistical confidence level.

In the presently preferred embodiment of the invention, the standard deviation determination of criteria 4 above is replaced by the much simpler process of monitoring the differences between successive mean values of the offset distances. (As each new offset distance is added to the ensemble of individual offset distances, a new mean value must be computed.) Once the difference between successive mean values falls below a predetermined threshold (signifying a stabilizing convergence of the mean values), the ensemble of individual differences between successive offset distances is sufficiently large to enable computation of the skew angle from the mean offset distance.

Alternatively, instead of collecting an ensemble of offset distances and computing their mean value, an individual skew angle may be computed for each offset distance to generate an ensemble of skew angles whose mean value is then computed and monitored.

In the example of Fig. 1b, the foregoing criteria are all met, and the offset angle $\theta$ is computed by first computing the individual offset angles $\theta_j$ defined at each step of the staircase of Fig. 1a. Then, the average of all $\theta_j$'s is taken, and it is this average which is output as the skew angle. (Alternatively, the skew angle is determined from the average of all offset distances $(x_j - x_{j-1})$.)

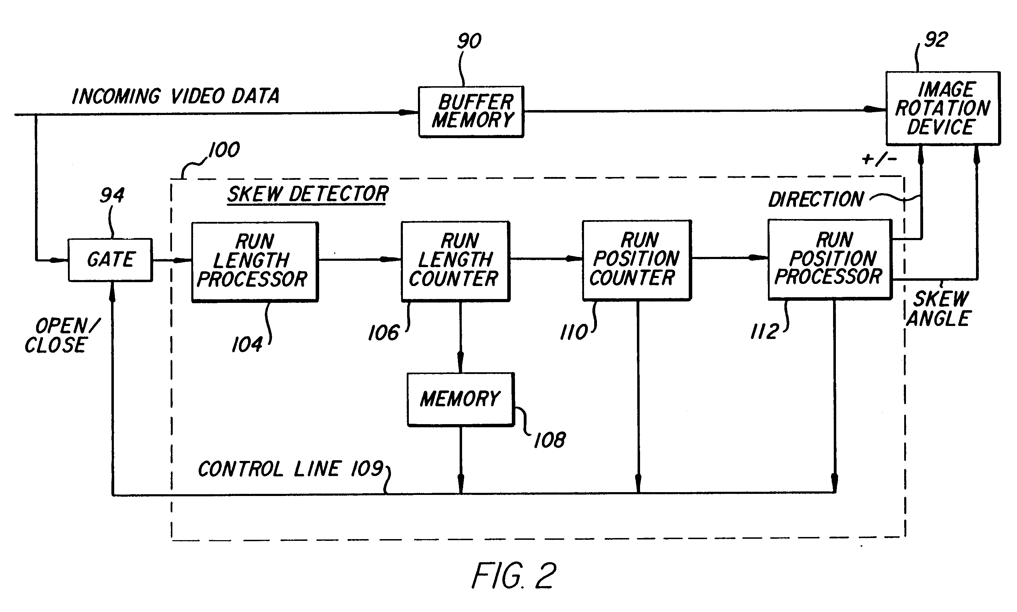

The system of the invention is illustrated in Fig. 2. Incoming video data is temporarily stored in a buffer memory 90 before being sent to an image rotation device 92. The image rotation device 92 is of the type well-known in the art, and, in response to a known skew angle, rotates the image represented by the video data so as to remove the objectionable skew present in the original image. The problem is to detect and measure the precise skew angle and furnish this information to the image rotation device 92.

For this purpose, the incoming video data stored in the buffer memory 90 is simultaneously admitted through a gate 94 to a skew detector 100. The skew detector includes a run length processor 104, a run length counter 106, a run position counter, a memory 108, a run position counter 110 and a run position processor 112.

The run length processor 104 monitors white run lengths in each line of the incoming video data and transforms all white pixels in any white run length below a predetermined threshold length to black pixels. This smears the data. Next, the run length processor 104 monitors black run lengths in each line of incoming video data and furnishes their locations to the run length counter 106. The run length counter 106 determines the starting pixel position of the longest black run length in each video line. All starting positions thus determined are stored in the memory 108. Until the memory 108 stores a predetermined number of such start positions, it continues to direct the gate 90 via a control line 109 to admit additional lines of incoming video data.

The run position counter 110 accumulates the differences (both positive and negative) between successive run length starting positions stored in the memory 108. The run position counter continues to direct the gate 90 via the control line 109 to admit successive lines of the incoming video data until the total accumulated difference exceeds a predetermined threshold, indicating that there is enough data to detect a skew angle.

The run position processor 112 monitors the standard deviation (or an equivalent parameter) of the ensemble of individual differences between successive run start positions received from the run position counter 110. Until the standard deviation (or equivalent parameter) indicates that a predetermined statistical level of confidence has been reached in the ensemble of individual differences, the run position processor 112 continues to direct the gate 90 via the control line 109 to admit successive lines of the incoming video data. As soon as the predetermined level of confidence has been reached, the run position processor 112 computes the mean value of the ensemble of individual differences between successive black run length start locations. The run position processor 112 then determines the skew angle by computing the arctangent of the ratio of the distance between adjacent horizontal lines in the incoming video data to the mean value of the ensemble of individual start locations. The skew angle thus determined is transmitted along with an indication of the skew direction (+ or -) to the image rotation device 92. The system of Fig. 2 performs this process at least once in each frame of incoming video data (assuming that all of the video data in a given frame is characterized by the same skew angle). It may perform the process more or less often, depending upon the user's requirements or the nature of the incoming video data.

Preferably, the run position processor 112 determines whether the ensemble of differences furnished by the run position counter 110 meet the criteria 1-4 given above. If the criteria are not met, the processor 112 causes the gate 90 to admit additional video data so that additional black run length start locations may be computed. Once the criteria 1-4 have been met, the black run length start locations are processed by a skew computing processor 28 so as to compute the average skew angle from the individual start locations, or start location differences or individual skew angles $\theta_j$, as described above.

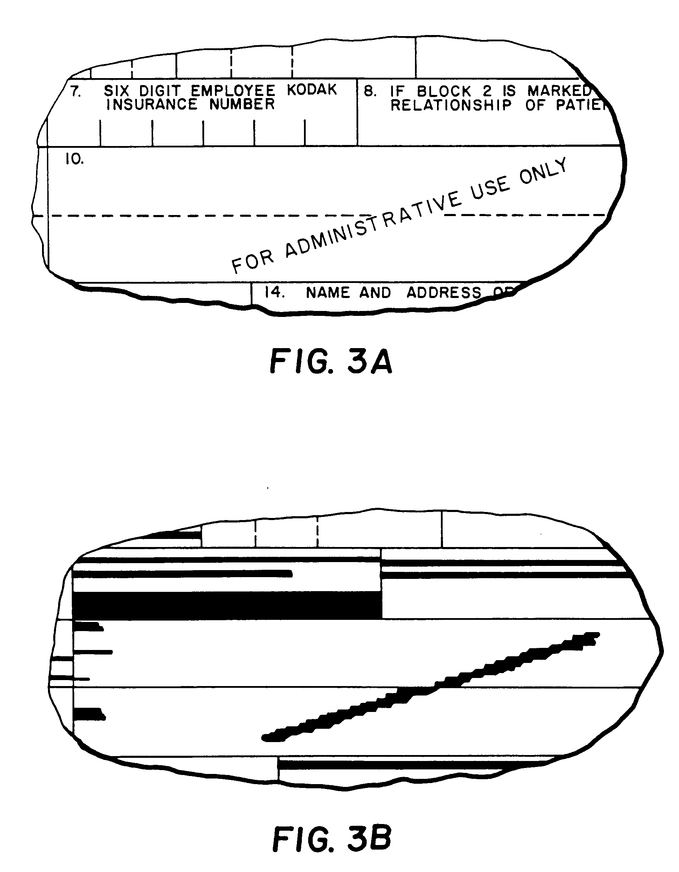

An actual example of the staircase pattern achieved using the run length processing of the invention is illustrated by comparing the input image of Fig. 3a with the processed image of Fig. 3b (which was computed from the input image of Fig. 3a in accordance with the foregoing described process). Note that the slanted printing, "for administrative use only" in Fig. 3a results in a spurious staircase pattern in the corresponding location of Fig. 3b. However, since each of the black run lengths resulting therefrom are not the longest black run lengths in each horizontal video line, this spurious staircase pattern is ignored, in accordance with the invention.

In the preferred embodiment of the invention, the algorithm executed by the system of Fig. 2 is as follows:

1. Load the next block of n lines of video data.

2. Do for $j = 1$ through n:

3. Receive data of video line j.

4. Organize into white run lengths.

5. Transform pixels in white run lengths of length less than w to black pixels.

6. Organize video data lines into black run lengths.

7. Select the longest black run length $r_j$ in line j.

8. Determine the start location $x_j$ of $r_j$.

9. Determine the number $D_j$ of black pixels in line j.

10. Determine $x_j - x_{j-1}$ and $\theta_j =$ tangent $(y_h/(x_j - x_{j-1}))$.

11. If $j < n$, then $j = j + 1$ and go to 3. Otherwise:

12. Do for $j = 1$ through n:

13. If $x_j - x_{j-1}$ is greater than $x_{max}$ or less than $x_{min}$ discard all data from video line j.

14. If $D_j < D_{min}$, disregard all data corresponding to video data line j.

15. If $j < n$, $j = j + 1$ and go to 13. Otherwise:

16. Do for $j = 1$ through n:

17. If $r_{j-1}$ and $r_{j+1}$ have been discarded in any previous step, discard all video data corresponding to video line j.

18. If $j < n$, $j = j + 1$ and go to 17. Otherwise:

19. For all j's not discarded so far, compute the following:

$$d = \sum_{j=1}^{N} x_j - x_{j-1}$$

and $\sigma(\theta_j) =$ standard deviation of all $\theta_j$'s.

20. If $d < d_t$ or if $\sigma(\theta_j) > \sigma_t$, go to 1. Otherwise:

21. Count the number m of $\theta_j$ not discarded thus far.

22. Compute

$$\theta = (1/m) \sum_{j=1}^{N} \theta_j$$

23. If $\theta$ is greater than $\theta_{max}$ or is less than $\theta_{min}$ stop. Flag error. Otherwise:

24. Output $\theta$ and the polarity (+ or -) of d.

In the foregoing skew correction algorithm, the following limits on each of the quantities specified therein are selected as follows:

In step 13, the offset distance $x_j - x_{j-1}$ had to be greater than $x_{min}$. $x_{min}$ corresponds to the minimum skew angle which the system can recognize. Ideally, this is only limited by the minimum pixel resolution size of the video system, and may be determined readily by the skilled worker. Furthermore, the offset distance $x_j - x_{j-1}$ had to be smaller than $x_{max}$. $x_{max}$ corresponds to the maximum skew angle which the optical character recognition system can handle and correct. This is determined in accordance with the optical character recognition system requirements. In one example, the minimum angle $x_{min}$ is .08° and the maximum angle $x_{max}$ is 4.0°.

Step 14 of the invention required that the number $D_j$ of black pixels in a given horizontal video line (j) had to be greater than a threshold number $D_{min}$. This threshold number may be selected by the skilled worker in such a manner as to ignore a "spurious" staircase pattern such as that illustrated in Figs. 3a and 3b corresponding to the slanted label "for administrative use only" in the otherwise unskewed printed image of Fig. 3a.

Step 20 required that the absolute value of the sum d of the offset distances be greater than a threshold magnitude $d_t$. This threshold magnitude may be selected to be the number m of individual offset distances comprising the sum d multiplied by the arc cotangent of the minimum correctable angle (e.g., .08°). The skilled worker may select any other suitable criteria for $d_t$.

Finally, the standard deviation $\sigma(\theta_j)$ of the ensemble of individual skew angles $\theta_j$ was required in step 20 to be less than a threshold standard deviation $\sigma_t$. $\sigma_t$ is computed from the number m of samples in the ensemble and a statistical confidence level and probability value selected by the user. Assuming that the ensemble of individual skew angles $\theta_j$ obey Gaussian statistics, $\sigma_t$ is easily determined in accordance with well-known principles or by simply looking up in a table which correlates probability values, confidence levels and number of samples.

Step 23 required that the average skew angle $\theta$ be no greater than $\theta_{max}$ and no less than $\theta_{min}$. Again, $\theta_{max}$ and $\theta_{min}$ may, in one example, be selected to correspond to .08° and 4.0°, respectively.

The skew correction algorithm of steps 1 through 23 above is just one of many possible examples for implementing the invention. It may be readily modified. For example, the roles of the white pixels and black pixels may be reversed in the first two steps of the run-length processing, so that a "white" staircase is formed, rather than the "black" staircase of Fig. 1b. Accordingly, it is understood that, while the invention has been described in detail with particular reference to preferred embodiments thereof, variations and modifications may be made without departing from the scope of the invention as defined by the claims.

**Claims**

1. A de-skewing system for use in an optical character recognition system, said de-skewing system comprising:

   means for receiving and storing successive lines of video data representing an image, each of said lines of video data comprising successive video pixels, each of said successive pixels having one of first and second values;

   means (100) for:

   a. organizing said lines of video data into first run lengths (12) comprising continuous successions of pixels of said first value;

   b. transforming the pixels in those of said first run lengths having a length less than a first threshold length (W) into pixels of said second value;

   c. organizing said lines of video data transformed by said transforming means (104) into second run lengths (16) comprising continuous successions of pixels of said second value, each of said second run lengths being characterized by its start location in the corresponding line of said video data, so as to generate an ensemble of start locations of said second run lengths;

   d. selecting the start location $(X_j)$ of the longest second run-length in each video line and computing offset distances $(X_j - X_{j-1})$ between pairs of successive ones of said selected start locations.

   e. a computing an average skew angle $(\theta)$ from said offset distances.

2. The de-skewing system of claim 1 wherein said means for computing said average skew angle further comprise:

   means (112) for computing discrete skew angles from each of said offset distances and computing the average of all of said skew angles.

3. The de-skewing system claim 1 wherein said means for computing said average skew angle further comprise:

   means (112) for computing the average of all of said offset distances and computing said skew angle from said average of said offset distances.

4. The de-skewing system of claim 1 further comprising:

   means (106, 110) responsive to said means (112) for computing said start locations for computing the standard deviation of said start locations and, whenever said standard deviation exceeds a predetermind standard deviation value, for inhibiting said means (112) for computing a skew angle, and for signaling said means (106) for storing said video data to obtain additional lines of said video data, whereby said ensemble of second run length start locations may be augmented.

5. The de-skewing system of claim 1 further comprising:

   means (106, 110) for discarding any of said second run lengths and the corresponding start locations thereof corresponding to offset distances falling outside a predetermined range.

6. The de-skewing system of claim 1 further comprising means (104) for discarding the video data of any of the said lines of video data in which the number of pixels characterized by said second value is less than a predetermined threshold pixel number.

7. The de-skewing system of claim 5 or 6 further comprising means (106, 110) for discarding the data of any line of video data not included in a succession of lines of video data which have not been discarded by said means for discarding.

8. The de-skewing system of claim 7 wherein said means (106, 110) for inhibiting responds only to those lines of video data which have not been discarded by any of said means for discarding.

9. A method for reliably determining the skew angle in video data organized into video lines of successive pixels, each of said successive pixels being having one of first and second values, said method comprising:

     a. organizing at least some of said lines of video data into first run lengths comprising continuous successions of pixels of said first value;

     b. transforming the pixels in those of said first run lengths having a length less than a first threshold length into pixels of said second values;

     c. organizing each of said lines of the video data transformed by said transforming means into second run lengths, comprising continuous successions of pixels of said second value, each of said second run lengths being characterized by its start location in the corresponding line of said video data, so as to generate an ensemble of start locations of said second run lengths;

     d. selecting the start location $(X_j)$ of the longest second run-length in each video line and computing offset distances $(X_j-X_{j-1})$ between pairs of successive ones of said selected start locations.

     e. a computing an average skew angle from said offset distances.

10. The method of claim 9 further comprising:

     sensing whenever the accumulated distances between said selected starting locations do not correspond to sufficient data for detecting a skew angle or the standard deviation of the ensemble of differences between selected starting locations is not sufficiently small and inhibiting the average skew angle computing step until an additional amount of lines of video data are received and processed in steps a-c so that the standard deviation is below a threshold value.

11. The method of claim 10 further comprising:

     discarding prior to said determining step any of said start locations not falling in a continuous succession of ensembled start locations of said second run lengths.

12. The method of claim 11 further comprising:

     determining prior to said second determining step whether any of said start locations correspond to an offset distance or to an offset angle with an adjacent start location not falling within a preselected bound, and discarding said start location in response thereto.

13. A method for reliably determining the skew angle in video data organized into video lines of successive pixels, each of said successive pixels having one of first and second values, said method comprising:

     receiving and storing successive lines of video data representing an image, each of said lines of video data comprising successive video pixels, each of said successive pixels characterized by at least first and second values corresponding to a sensed white or black colour;

     forming a succession of white run lengths in each of said lines of video data and transforming individual pixels in those of said white run lengths having a run length shorter than a threshold white run length to black;

     forming a succession of black run lengths and selecting that black run length having the longest length in a given row, so as to form an ensemble of black run lengths and corresponding black run length start locations and a corresponding ensemble of offset distances between the black run length start locations of adjacent rows of said video data; and

     computing an average skew angle from said ensemble of offset distances.

14. The method of claim 13 further comprising:

     determining whether any of said ensembled offset distances are unreliable by falling outside of a specified range and discarding them if they are unreliable before performing said step of determining said average skew angle.

15. The method of claim 14 further comprising:

     discarding any of said offset distances not falling in a continuous succession of ensembled offset distances after said discarding step prior to said step of determining said skew angle.

16. The method of claim 14 wherein said reliability determining step comprises determining whether a given offset distance falls within a predetermined limit.

**17.** The method of claim 13 further comprising:
computing the standard deviation of said ensemble of offset distances and inhibiting said skew angle determining step until additional video data is received with which to augment said ensemble until said standard deviation is decreased below a standard deviation threshold.

**18.** The method of claim 13 further comprising:
computing a new mean value from said ensemble of offset distances whenever an additional offset distance is added thereto so as to produce successive means values, and inhibiting said skew angle determining step to allow additional video data to be received with which to augment said ensemble until the difference between later ones of said successive mean values falls below a predetermined threshold.

**19.** The method of claim 18 wherein said successive mean values computed from said ensemble are computed by first computing an individual skew angle for each offset distance to produce an ensemble of skew angles from said ensemble of offset distances and then computing the mean value of said ensemble of skew angles.

**Patentansprüche**

**1.** Entzerrersystem in einer optischen Zeichenerkennungseinrichtung, gekennzeichnet durch
- Mittel zur Aufnahme und Speicherung aufeinanderfolgender Zeilen von ein Bild darstellenden Videodaten, wobei jede der Zeilen von Videodaten aufeinanderfolgende Videopixel und jedes der aufeinanderfolgenden Pixel einen von ersten und zweiten Werten aufweisen;
- Mittel (100)
  a) zum Ordnen der Videodatenzeilen in erste Lauflängen (12), die kontinuierliche Pixelfolgen des ersten Werts umfassen;
  b) zum Umwandeln der Pixel in den ersten Lauflängen, die eine Länge aufweisen, welche geringer ist als eine erste Schwellenlänge (W), in Pixel mit dem zweiten Wert;
  c) zum Ordnen der durch die Umwandlungsmittel (104) geänderten Videodatenzeilen in zweite Lauflängen (16), die kontinuierliche Pixelfolgen des zweiten Werts aufweisen, wobei jede der zweiten Lauflängen durch ihre Startposition in der entsprechenden Zeile der Videodaten bestimmt ist, so daß eine Gruppe von Startpositionen der zweiten Lauflängen erzeugt wird;
  d) zum Auswählen der Startpositionen ($X_j$) der längsten zweiten Lauflänge in jeder Videozeile und Errechnen von Versatzgrößen ($X_j$-$X_{j-1}$) zwischen je zwei aufeinanderfolgenden, ausgewählten Startpositionen; und
  e) zum Berechnen eines durchschnittlichen Neigungswinkels ($\theta$) mit Hilfe der Versatzgrößen.

**2.** System nach Anspruch 1, dadurch gekennzeichnet, daß die Mittel zur Berechnung des durchschnittlichen Neigungswinkels Mittel (112) aufweisen, die diskrete Neigungswinkel aus jeder der Versatzgrößen sowie daraus einen Durchschnittswert der Neigungswinkel errechnen.

**3.** System nach Anspruch 1, dadurch gekennzeichnet, daß die Mittel zur Berechnung des durchschnittlichen Neigungswinkels Mittel (112) aufweisen, die den Durchschnitt aller Versatzgrößen sowie den Neigungswinkel aus dem Durchschnitt der Versatzgrößen errechnen.

**4.** System nach Anspruch 1, gekennzeichnet durch auf die Mittel (112) zur Berechnung der Startpositionen ansprechende Mittel (106, 110), die die Standardabweichung der Startpositionen berechnen, die Mittel (112) zur Berechnung eines Neigungswinkels jeweils dann blokkieren, wenn die Standardabweichung einen vorgegebenen Wert überschreitet, und ein Signal an die Mittel (106) abgeben zum Speichern der Videodaten, um zusätzliche Videodatenzeilen zu erhalten, wobei die Gruppe der Startpositionen der zweiten Lauflängen verstärkt werden kann.

**5.** System nach Anspruch 1, gekennzeichnet durch Mittel (106, 110), die alle zweiten Lauflängen sowie deren entsprechende Startpositionen, die Versatzgrößen entsprechen, eliminieren, sofern sie außerhalb eines vorgegebenen Bereichs liegen.

**6.** System nach Anspruch 1, gekennzeichnet durch Mittel (104), die die Videodaten jeder Videodatenzeile eliminieren, in welcher die Anzahl der durch den zweiten Wert bestimmten Pixel unter einem vorgegebenen Grenzwert liegt.

**7.** System nach Anspruch 5, gekennzeichnet durch Mittel (106, 110), die die Daten aller Videodatenzeilen, die nicht zu einer Folge von Videodatenzeilen gehören und nicht durch die Mittel zur Ausscheidung eliminiert wurden, ausrangieren.

8. System nach Anspruch 7, dadurch gekennzeichnet, daß die Blockiermittel (106, 110) nur auf die Zeilen von Videodaten ansprechen, die nicht durch ein Mittel zur Ausscheidung eliminiert wurden.

9. Verfahren zur zuverlässigen Bestimmung des Neigungswinkels von in Videozeilen von aufeinanderfolgenden Pixeln geordneten Videodaten, wobei jedes der aufeinanderfolgenden Pixel einen von ersten und zweiten Werten aufweist, gekennzeichnet durch

a) Ordnen mindestens einiger der Videodatenzeilen in erste Lauflängen mit kontinuierlichen Pixelfolgen des ersten Werts;
b) Umwandeln der Pixel in den ersten Lauflängen, die eine Länge aufweisen, welche geringer ist als eine erste Schwellenlänge, in Pixel mit dem zweiten Wert;
c) Ordnen jeder durch die Umwandlungsmittel geänderten Videodatenzeilen in zweite Lauflängen, die kontinuierliche Pixelfolgen des zweiten Werts aufweisen, wobei jede der zweiten Lauflängen durch ihre Startposition in der entsprechenden Zeile der Videodaten bestimmt ist, so daß eine Gruppe von Startpositionen der zweiten Lauflängen erzeugt wird;
d) Auswählen der Startposition ($X_j$) der längsten zweiten Lauflänge in jeder Videozeile und Errechnen von Versatzgrößen ($X_j$-$X_{j-1}$) zwischen je zwei aufeinanderfolgenden ausgewählten Startpositionen; und
e) Berechnen eines durchschnittlichen Neigungswinkels aus den Versatzgrößen.

10. Verfahren nach Anspruch 9, dadurch gekennzeichnet, daß jeweils dann eine Abtastung erfolgt, wenn die akkumulierten Größen zwischen den ausgewählten Startpositionen keiner ausreichenden Datenmenge für das Erfassen eines Neigungswinkels entsprechen oder die Standardabweichung der Gruppe von Differenzwerten zwischen ausgewählten Startpositionen nicht klein genug ist, und daß der Berechnungsschritt für den durchschnittlichen Neigungswinkel blockiert wird, bis eine zusätzliche Menge von Videodatenzeilen erhalten und in den Schritten a - c verarbeitet wird, so daß die Standardabweichung unter einem Grenzwert liegt.

11. Verfahren nach Anspruch 10, dadurch gekennzeichnet, daß vor dem Bestimmungsschritt alle Startpositionen, die nicht in eine kontinuierliche Folge von gruppierten Startpositionen der zweiten Lauflängen fallen, ausgeschieden werden.

12. Verfahren nach Anspruch 11, dadurch gekennzeichnet, daß vor dem zweiten Bestimmungsschritt ermittelt wird, ob irgendwelche der Startpositionen einer Versatzgröße oder einem Winkelversatz mit einer nicht innerhalb eine vorgewählte Begrenzung fallenden benachbarten Startposition entsprechen, und daß anschließend diese Startposition ausgeschieden wird.

13. Verfahren zur zuverlässigen Bestimmung des Neigungswinkels von in Videozeilen von aufeinanderfolgenden Pixeln geordneten Videodaten, wobei jedes der aufeinanderfolgenden Pixel einen von ersten und zweiten Werten aufweisen, gekennzeichnet durch

- Aufnahme und Speicherung aufeinanderfolgender, ein Bild darstellender Videodatenzeilen, wobei jede der Videodatenzeilen aufeinanderfolgende Videopixel aufweist und jedes der aufeinanderfolgenden Pixel durch mindestens erste und zweite, einer abgetasteten weißen oder schwarzen Farbe entsprechenden Werte bestimmt ist;
- Bilden einer Folge von weißen Lauflängen in jeder der Videodatenzeilen und Umwandeln einzelner Pixel in jenen weißen Lauflängen mit einer gegenüber einer weißen Grenzlauflänge kürzeren Lauflänge;
- Bilden einer Folge von schwarzen Lauflängen und Auswählen jener schwarzen Lauflänge mit der längsten Länge in einer gegebenen Reihe, so daß eine Gruppe schwarzer Lauflängen und entsprechende Startpositionen der schwarzen Lauflängen und eine entsprechende Gruppe von Versatzgrößen zwischen den Startpositionen der schwarzen Lauflängen von benachbarten Reihen der Videodaten gebildet werden; und
- Berechnen eines durchschnittlichen Neigungswinkels mit Hilfe der Gruppe der Versatzgrößen.

14. Verfahren nach Anspruch 13, dadurch gekennzeichnet, daß ermittelt wird, ob irgendwelche der gruppierten Versatzgrößen dadurch unzuverlässig sind, daß sie außerhalb eines festgelegten Bereichs liegen, und daß diese vor der Durchführung des Schritts zur Bestimmung des durchschnittlichen Neigungswinkels ausgeschieden werden.

15. Verfahren nach Anspruch 14, dadurch gekennzeichnet, daß nach dem Ausscheidungsschritt und vor dem Schritt zur Bestimmung des Neigungswinkels alle Versatzgrößen, die nicht in eine kontinuierliche Folge von gruppierten Versatzgrößen fallen, ausgeschieden werden.

16. Verfahren nach Anspruch 14, dadurch gekennzeichnet, daß der Schritt zur Bestimmung der Zuverlässigkeit die Ermittlung einschließt, ob eine gegebene Versatzgröße innerhalb einer vorbestimmten Grenze liegt.

17. Verfahren nach Anspruch 13, dadurch gekennzeichnet, daß die Standardabweichung der Gruppe von Versatzgrößen berechnet und der Bestimmungsschritt für den Neigungswinkel blockiert wird, bis weitere Videodaten erhalten werden, mit denen die Gruppe vergrößert wird, bis die Standardabweichung unter einem bestimmten Grenzwert fällt.

18. Verfahren nach Anspruch 13, dadurch gekennzeichnet, daß ein neuer Durchschnittswert mit Hilfe der Gruppe von Versatzgrößen jeweils dann berechnet wird, wenn eine weitere Versatzgröße der Gruppe hinzugefügt wird, so daß aufeinanderfolgende Mittelwerte erzeugt werden, und daß der Bestimmungsschritt für den Neigungswinkel blockiert wird, damit weitere Videodaten erhalten werden können, mit denen die Gruppe vergrößert wird, bis die Differenz zwischen den später erhaltenen aufeinanderfolgenden Mittelwerten unter einen vorbestimmten Grenzwert fällt.

19. Verfahren nach Anspruch 18, dadurch gekennzeichnet, daß die mit Hilfe der Gruppe errechneten aufeinanderfolgenden Mittelwerte so berechnet werden, daß zuerst für jede Versatzgröße ein eigener Neigungswinkel berechnet wird, um mit Hilfe der Gruppe der Versatzgrößen eine Gruppe von Neigungswinkeln zu erzeugen, und anschließend der Mittelwert der Gruppe von Neigungswinkeln berechnet wird.

**Revendications**

1. Système de suppression d'inclinaison destiné à être utilisé dans un système de reconnaissance optique de caractères, ledit système de suppression d'inclinaison comprenant :
   un moyen servant à recevoir et mémoriser des lignes successives de données vidéo représentant une image, chacune desdites lignes de données vidéo comprenant des éléments d'image, ou pixels, vidéo successifs, chacun desdits pixels successifs ayant l'une de deux valeurs, à savoir une première et une deuxième valeur;
   des moyens (100) permettant de :
   a. organiser lesdites lignes de données vidéo en premières longueurs de parcours (12) comprenant des successions continues de pixels de ladite première valeur;
   b. transformer les pixels de celles desdites premières longueurs de parcours qui ont une longueur inférieure à une première longueur de seuil (w) en pixels de ladite deuxième valeur;
   c. organiser lesdites lignes de données vidéo transformées par ledit moyen de transformation (104) en deuxièmes longueurs de parcours (16) comprenant des successions continues de pixels de ladite deuxième valeur, chacune desdites deuxièmes longueurs de parcours étant caractérisée par la position de son début dans la ligne correspondante desdites données vidéo, de façon à produire un regroupement de positions de début desdites deuxièmes longueurs de parcours;
   d. sélectionner la position de début $(x_j)$ de la plus longue des deuxièmes longueurs de parcours dans chaque ligne vidéo et calculer des distances de décalage $(x_j - x_{j-1})$ entre paires de positions successives pour lesdites positions de début sélectionnées;
   e. calculer un angle d'inclinaison moyen $(\theta)$ à partir desdites distances de décalage.

2. Système de suppression d'inclinaison selon la revendication 1, où ledit moyen permettant de calculer ledit angle d'inclinaison moyen comprend en outre :
   un moyen (112) permettant de calculer des angles d'inclinaison distincts à partir de chacune desdites distances de décalage et de calculer la moyenne de tous lesdits angles d'inclinaison.

3. Système de suppression d'inclinaison selon la revendication 1, où ledit moyen permettant de calculer ledit angle d'inclinaison moyen comprend en outre :
   un moyen (112) permettant de calculer la moyenne de toutes lesdites distances de décalage et de calculer ledit angle d'inclinaison à partir de ladite moyenne desdites distances de décalage.

4. Système de suppression d'inclinaison selon la revendication 1, comprenant en outre :

un moyen (106, 110) répondant audit moyen (112) de manière à calculer lesdites positions de début afin de calculer l'écart type desdites positions de début et, à chaque fois que ledit écart type dépasse une valeur prédéterminée d'écart type, empêcher ledit moyen (112) de calculer un angle d'inclinaison, et, de plus, envoyer un signal audit moyen (106) pour mémoriser lesdites données vidéo afin d'obtenir des lignes supplémentaires desdites données vidéo, si bien que ledit regroupement de positions de début de deuxièmes longueurs de parcours peut être augmenté.

5. Système de suppression d'inclinaison selon la revendication 1, comprenant en outre :

un moyen (106, 110) servant à rejeter toute dite deuxième longueur de parcours et la position de début qui lui correspond si elles correspondent à une distance de décalage se trouvant en dehors d'un intervalle prédéterminé.

6. Système de suppression d'inclinaison selon la revendication 1, comprenant en outre un moyen (104) servant à rejeter les données vidéo de toute dite ligne de données vidéo dans laquelle le nombre de pixels caractérisé par ladite deuxième valeur est inférieur à un nombre de pixels constituant un seuil prédéterminé.

7. Système de suppression d'inclinaison selon la revendication 5 ou 6, comprenant en outre un moyen (106, 110) servant à rejeter les données de toute ligne de données vidéo qui n'est pas incluse dans une succession de lignes de données vidéo qui n'ont pas été rejetées par ledit moyen de rejet.

8. Système de suppression d'inclinaison selon la revendication 7, où ledit moyen (106,110) d'empêchement ne répond qu'aux lignes de données vidéo qui n'ont pas été rejetées par l'un quelconque desdits moyens de rejet.

9. Procédé permettant de déterminer de manière fiable l'angle d'inclinaison apparaissant dans des données vidéo organisées en lignes vidéo de pixels successifs, chacun desdits pixels successifs présentant l'une de deux valeurs, à savoir une première et une deuxième valeur, ledit procédé comprenant les opérations suivantes :

a. organiser au moins certaines desdites lignes de données vidéo en premières longueurs de parcours comprenant des successions continues de pixels de ladite première valeur;

b. transformer les pixels de celles desdites premières longueurs de parcours qui ont une longueur inférieure à une première longueur de seuil en pixels de ladite deuxième valeur;

c. organiser chacune desdites lignes de données vidéo qui ont été transformées par ledit moyen de transformation en des deuxièmes longueurs de parcours, comprenant des successions continues de pixels de ladite deuxième valeur, chacune desdites deuxièmes longueurs de parcours étant caractérisée par la position de son début dans la ligne correspondante desdites données vidéo, de façon à produire un regroupement de positions de début desdites deuxièmes longueurs de parcours;

d. sélectionner la position de début $(x_j)$ de la plus longue des deuxièmes longueurs de parcours dans chaque ligne vidéo et calculer des distances de décalage $(x_j-x_{j-1})$ entre paires de positions successives parmi lesdites positions de début sélectionnées;

e. calculer un angle d'inclinaison moyen à partir desdites distances de décalage.

10. Procédé selon la revendication 9, comprenant en outre les opérations suivantes :

repérer chaque cas où les distances accumulées entre lesdites positions de début sélectionnées ne correspondent pas à des données suffisantes pour permettre la détection d'un angle d'inclinaison ou bien où l'écart type dudit regroupement de différences entre positions de début sélectionnées n'est pas suffisamment petit, et empêcher l'opération de calcul de l'angle d'inclinaison moyen jusqu'à ce qu'un nombre supplémentaire de lignes de données vidéo aient été reçues et traitées au cours des opérations a-c de façon que l'écart type soit en dessous d'une valeur de seuil.

11. Procédé selon la revendication 10, comprenant en outre l'opération suivante :

rejeter, avant ladite opération de détermination, toute dite position de début ne se trouvant pas dans une succession continue de positions de début regroupées desdites deuxièmes longueurs de parcours.

12. Procédé selon la revendication 11, comprenant en outre les opérations suivantes :

déterminer, avant ladite deuxième opération de détermination, si l'une quelconque desdites positions de début correspond à une distance de décalage ou à un angle de décalage pour lesquels une position de début adjacente ne se trouve pas à l'intérieur d'une limite présélectionnée, et, dans ce cas, rejeter cette position de début.

13. Procédé permettant de déterminer de manière fiable l'angle d'inclinaison apparaissant dans des données vidéo organisées en lignes vidéo de pixels successifs, chacun desdits pixels successifs ayant l'une de deux valeurs, à savoir une première et une deuxième valeur, ledit procédé comprenant les opérations suivantes :

recevoir et mémoriser des lignes successives de données vidéo représentant une image, chacune desdites lignes de données vidéo comprenant des pixels vidéo successifs, chacun desdits pixels successifs étant caractérisé par au moins une première et une deuxième valeur correspondant à une couleur blanche ou noire détectée;

former une succession de longueurs de parcours blanches dans chacune desdites lignes de données vidéo et transformer en noir les pixels particuliers de celles desdites longueurs de parcours blanches qui ont une longueur de parcours plus courte qu'une longueur de parcours blanche de seuil;

former une succession de longueurs de parcours noires et sélectionner la longueur de parcours noire qui possède la plus grande longueur dans une rangée donnée, de manière à former un regroupement de longueurs de parcours noires et de positions correspondantes de début de longueurs de parcours noires, ainsi qu'un regroupement correspondant de distances de décalage entre les positions de début de longueurs de parcours noires de rangées adjacentes desdites données vidéo ; et

calculer un angle d'inclinaison moyen à partir dudit regroupement de distances de décalage.

14. Procédé selon la revendication 13, comprenant en outre les opérations suivantes :

déterminer si certaines desdites distances de décalage regroupées sont non fiables du fait qu'elles se trouvent à l'extérieur d'un intervalle spécifié, et rejeter celles-ci, si elles ne sont pas fiables, avant d'exécuter ladite opération de détermination dudit angle d'inclinaison moyen.

15. Procédé selon la revendication 14, caractérisé en ce qu'il comprend en outre l'opération suivante :

rejeter celles desdites distances de décalage qui ne se trouvent pas dans une succession continue de distances de décalage regroupées après ladite opération de rejet, et avant ladite opération de détermination dudit angle d'inclinaison.

16. Procédé selon la revendication 14, où ladite opération de détermination de fiabilité comprend l'opération qui consiste à déterminer si une distance de décalage donnée se trouve à l'intérieur d'une limite prédéterminée.

17. Procédé selon la revendication 13, comprenant en outre les opérations suivantes :

calculer l'écart type dudit regroupement de distances de décalage et empêcher ladite opération de détermination de l'angle d'inclinaison jusqu'à ce qu'aient été reçues un plus grand nombre de données vidéo au moyen desquelles ledit regroupement sera augmenté jusqu'à faire diminuer ledit écart type en deçà d'un seuil d'écart type.

18. Procédé selon la revendication 13, comprenant en outre les opérations suivantes :

calculer une nouvelle valeur moyenne à partir dudit regroupement de distances de décalage à chaque fois qu'une distance de décalage supplémentaire est ajoutée à celui-ci de façon à produire des valeurs moyennes successives, et empêcher ladite opération de détermination de l'angle d'inclinaison afin de permettre que soient reçues un plus grand nombre de données vidéo au moyen desquelles ledit regroupement sera augmenté jusqu'à ce que la différence entre les dernières desdites valeurs moyennes successives se trouve en deçà d'un seuil prédéterminé.

19. Procédé selon la revendication 18, où lesdites valeurs moyennes successives calculées à partir dudit regroupement sont calculées d'abord par calcul d'un angle d'inclinaison particulier pour chaque distance de décalage, afin de produire un regroupement d'angles de décalage à partir dudit regroupement de distances de décalage, puis par calcul de la valeur moyenne des angles dudit regroupement d'angles d'inclinaison.

FIG. 1a

FIG. 1b

FIG. 2

14

FIG. 3A

FIG. 3B